# EUROPÄISCHE PATENTSCHRIFT

(11) **EP 3 888 116 B1**
(45) Veröffentlichungstag und Bekanntmachung des Hinweises auf die Patenterteilung: **09.04.2025**
(21) Anmeldenummer: 19806001.4
(22) Anmeldetag: 26.11.2019
(51) Int. Cl.: H01H 89/06, G05B 19/042, H01R 9/26, H02P 1/02

(54) **MODULARE SCHALTVORRICHTUNG ZUM ANSTEUERN WENIGSTENS EINES ELEKTRISCHEN ANTRIEBS**
MODULAR SWITCH APPARATUS FOR CONTROLLING AT LEAST ONE ELECTRIC DRIVE
DISPOSITIF DE COMMUTATION MODULAIRE POUR LA COMMANDE D'AU MOINS UN ENTRAÎNEMENT ÉLECTRIQUE

(30) Priorität: 26.11.2018 BE 201805827
(43) Veröffentlichungstag der Anmeldung: 06.10.2021
(73) Patentinhaber: PHOENIX CONTACT GMBH & CO. KG, 32825 Blomberg (DE)
(72) Erfinder: HANSMEIER, Stephan, 32108 Bad Salzuflen (DE); SCHULZ, Bernd, 37671 Höxter (DE); RAGALLER, Matthias, 33175 Bad Lippspringe (DE); PLEWKA, Dirk, 33039 Nieheim (DE)
(74) Vertreter: Blumbach · Zinngrebe Patentanwälte PartG mbB
(86) Internationale Anmeldenummer: PCT/EP2019/082531
(87) Internationale Veröffentlichungsnummer: WO 2020/109285

(56) Entgegenhaltungen:
- WO-A1-2018/055078
- DE-A1- 10 102 316
- DE-U1- 202006 006 659

## Beschreibung

Die Erfindung betrifft eine modulare Schaltvorrichtung zum Ansteuern wenigstens eines elektrischen Antriebs, wobei die modulare Schaltvorrichtung insbesondere in einem industriellen Automatisierungssystem eingesetzt werden kann.

Ein sicherer Motorstarter ist beispielsweise aus der EP 2 727 125 B1 bekannt. Der sichere Motorstarter weist ein Sicherheitsauswertegerät und ein sicheres Schaltgerät auf, wobei an das sichere Schaltgerät ein Versorgungsnetz und beispielsweise ein Motor angeschlossen werden kann. Darüber hinaus weist das sichere Schaltgerät zwei in Reihe geschaltete Schaltglieder auf. Das Sicherheitsauswertegerät kann mit einem Not-Halt-Taster verbunden sein. Das Sicherheitsauswertegerät und das sichere Schaltgerät sind mechanisch und elektrisch mit einem Verbindungsmodul koppelbar, wobei ein durch Betätigung des Not-Halt-Tasters ausgelöster Steuerbefehl vom Sicherheitsauswertegerät über das Verbindungsmodul zum sicheren Schaltgerät übertragen werden kann. Unter Ansprechen auf den Steuerbefehl steuert eine Verarbeitungseinheit des sicheren Schaltgeräts die Schaltglieder entsprechend an, so dass der Motor vom Versorgungsnetz abgeschaltet werden kann.

Aus der EP 1 589 386 B1 ist eine Prozesssteuerung bekannt, bei der Prozesssignale eines Prozessmoduls und Sicherheitssignale eines Sicherheitsmoduls logisch mit einander verknüpft werden, wobei das Ergebnis der logischen Verknüpfung an einem Steuerausgang einer Steuereinheit bereitgestellt wird, an den eine zu steuernde Prozesseinrichtung angeschlossen ist. Das Prozessmodul und das Sicherheitsmodul kommunizieren über ein gemeinsames Kommunikationssystem mit der Steuereinheit. Das Dokument WO 2018/055078 zeigt ebenfalls ein Motorstarter aber ohne Tragschienenbussystem mit zwei Energieversorgungsleitungen.

Der Erfindung liegt die Aufgabe zugrunde, eine modulare Schaltvorrichtung zum Ansteuern wenigstens eines elektrischen Antriebs zu schaffen, welches in einfacher und kostengünstiger Weise skalierbar ist und in einfacher Weise verdrahtet werden kann.

Das oben genannte technische Problem wird durch die Merkmale des Anspruchs 1 gelöst.

Demnach wird eine modulare Schaltvorrichtung zum Ansteuern wenigstens eines elektrischen Antriebs geschaffen, wobei die modulare Schaltvorrichtung folgende Merkmale aufweist:
- ein Tragschienenbussystem, welches eine Tragschiene und wenigstens zwei, nämlich einen ersten und einen zweiten Busverbinder aufweist, wobei die wenigstens zwei Busverbinder elektrisch und mechanisch miteinander koppelbar und zum Anordnen in der Tragschiene ausgebildet sind und im montierten Zustand eine Steuerleitung und zwei Energieversorgungsleitungen enthalten, wobei jeder der wenigstens zwei Busverbinder eine Modul-Schnittstelle aufweist,
- eine Energieversorgungseinrichtung, die dazu ausgebildet ist, an den beiden Energieversorgungsleitungen des Tragschienenbussystems eine Versorgungsgleichspannung anzulegen,
- ein Sicherheitsrelaismodul mit folgenden Merkmalen:
   einer erste Anschlusseinrichtung, an welche eine Not-Halt-Befehlseinrichtung anschaltbar ist,
   einer ersten Bus-Schnittstelle, die zum elektrischen Verbinden mit der Modul-Schnittstelle des ersten Busverbinders ausgebildet ist, wobei im verbundenen Zustand das Sicherheitsrelaismodul elektrisch mit den beiden Energieversorgungsleitungen und
   der Steuerleitung des Tragschienenbussystems verbunden ist,
   wobei das Sicherheitsrelaismodul dazu ausgebildet ist, ein erstes Steuersignal mit einem High-Pegel aus einer an den beiden Energieversorgungsleitungen anliegenden Versorgungsgleichspannung zu gewinnen und das erste Steuersignal über die erste Bus-Schnittstelle der Steuerleitung zuzuführen, wenn die Not-Halt-Befehlseinrichtung nicht betätigt worden ist,
- wenigstens ein sicheres Motorstartermodul mit folgenden Merkmalen:
   einer zweiten Bus-Schnittstelle, die zum elektrischen Verbinden mit der Modul-Schnittstelle des zweiten Busverbinders ausgebildet ist, wobei im verbundenen Zustand das sichere Motorstartermodul elektrisch mit den beiden Energieversorgungsleitungen und der Steuerleitung des Tragschienenbussystems verbunden ist,
   einer zweiten Anschlusseinrichtung, an welche eine Energieversorgungseinrichtung zum Bereitstellen einer Versorgungsspannung für einen elektrischen Antrieb anschließbar ist,
   einer dritten Anschlusseinrichtung zum Anschalten eines elektrischen Antriebs, wenigstens einem Strompfad mit wenigstens zwei in Reihe geschalteten Schalteinrichtungen, die zwischen der zweiten und dritten Anschlusseinrichtung angeordnet sind, und
   einer Verarbeitungseinrichtung mit einem Eingang, der elektrisch über die zweite Bus-Schnittstelle mit der Steuerleitung verbindbar ist, wobei die Verarbeitungseinrichtung dazu ausgebildet ist, ein über die Steuerleitung übertragenes erstes Steuersignal mit einem High-Pegel auszuwerten und Steuersignale zum Ansteuern der wenigstens zwei Schalteinrichtungen bereitzustellen.

Um wenigstens einen elektrischen Antrieb sicher abschalten zu können, ist das Sicherheitsrelaismodul dazu ausgebildet, ein zweites Steuersignal mit einem Low-Pegel bereitzustellen und das zweite Steuersignal über die erste Bus-Schnittstelle der Steuerleitung des Tragschienenbussystems zuzuführen, wenn die Not-Halt-Befehlseinrichtung betätigt worden ist, wobei die Verarbeitungseinrichtung des wenigstens einen sicheren Motorstartermoduls dazu ausgebildet ist, ein über die Steuerleitung übertragenes zweites Steuersignal mit einem Low-Pegel auszuwerten und unter Ansprechen auf das zweite Steuersignal mit Low-Pegel Steuersignale zum Öffnen der wenigstens zwei Schalteinrichtungen zu erzeugen, um einen am wenigstens einen sicheren Motorstartermodul angeschlossenen elektrischen Antrieb sicher abzuschalten.

Eine zweckmäßige Weiterbildung sieht vor, dass das wenigstens eine sichere Motorstartermodul eine vierte Anschlusseinrichtung aufweist, an die eine übergeordnete Steuereinrichtung anschaltbar ist, wobei die übergeordnete Steuereinrichtung Steuersignale zum Starten oder Abschalten eines an das wenigstens eine Motorstartermodul angeschalteten elektrischen Antriebs für das sichere Motorstartermodul bereitstellen kann. Angemerkt sei, dass die Steuersignale der übergeordneten Steuereinrichtung nicht über das Tragschienenbussystem übertragen werden.

Gemäß einer vorteilhaften Weiterbildung ist die Verarbeitungseinrichtung des wenigstens einen sicheren Motorstartermoduls dazu ausgebildet, die Steuersignale der am sicheren Motorstartermodul angeschlossenen übergeordneten Steuereinrichtung nur dann auszuwerten und zu verarbeiten, wenn am Eingang der Verarbeitungseinrichtung eine über die Steuerleitung übertragenes erstes Steuersignal mit einem High-Pegel anliegt.

Eine kompakte Bauweise mit einem vereinfachten Verdrahtungsaufwand kann dadurch erreicht werden, dass das Tragschienenbussystem einen dritte Busverbinder aufweist, der elektrisch und mechanisch mit den wenigstens zwei Busverbindern koppelbar und zum Anordnen in der Tragschiene ausgebildet ist und eine Modul-Schnittstelle aufweist. Die Energieversorgungseinrichtung ist als Energieversorgungsmodul ausgebildet und weist eine dritte Bus-Schnittstelle, die zum elektrischen Verbinden mit der Modul-Schnittstelle des dritten Busverbinders ausgebildet ist. Im verbundenen Zustand ist das Energieversorgungsmodul elektrisch mit den beiden Energieversorgungsleitungen des Tragschienenbussystems verbunden und kann eine Versorgungsgleichspannung an die beiden Energieversorgungsleitungen anlegen.

Dank des speziellen modularen Aufbaus und der Tatsache, dass das Sicherheitsrelaismodul ein gemeinsames Steuersignal für mehrere sichere Motorstartermodule erzeugt, kann die modulare Schaltvorrichtung in einfacher Weise skaliert werden. Hierzu kann ein vierter Busverbinder mit einer Modul-Schnittstelle und ein weiteres sicheres Motorstartermodul montiert werden, welches folgende Merkmale aufweist:
Eine vierte Bus-Schnittstelle, die zum elektrischen Verbinden mit der Modul-Schnittstelle des vierten Busverbinders ausgebildet ist, wobei im verbundenen Zustand das weitere sichere Motorstartermodul elektrisch mit den beiden Energieversorgungsleitungen und der Steuerleitung des Tragschienenbussystems verbunden ist,
eine fünfte Anschlusseinrichtung, an welche eine Energieversorgungseinrichtung zum Bereitstellen einer Versorgungsspannung für einen weiteren elektrischen Antrieb anschließbar ist,
eine sechste Anschlusseinrichtung zum Anschalten eines weiteren elektrischen Antriebs,
wenigstens einen Strompfad mit wenigstens zwei in Reihe geschalteten Schalteinrichtungen, die zwischen der fünften und sechsten Anschlusseinrichtung angeordnet sind, und
eine Verarbeitungseinrichtung mit einem Eingang, der elektrisch über die vierte Bus-Schnittstelle mit der Steuerleitung verbindbar ist, wobei
die Verarbeitungseinheit dazu ausgebildet ist, ein über die Steuerleitung übertragenes erstes Steuersignal mit einem High-Pegel auszuwerten und Steuersignale zum Ansteuern der wenigstens zwei Schalteinrichtungen bereitzustellen.

Vorzugsweise sind die Busverbinder jeweils als T-förmige Steckverbinder ausgebildet.

Ein Tragschienenbussystem mit einem derartigen T-förmigen Steckverbindern ist beispielsweise aus der DE 20 2006 006 659 U1 der Anmelderin bekannt.

Zweckmäßiger Weise kann das Sicherheitsrelaismodul ein mit der ersten Bus-Schnittstelle verbundenes Netzteil aufweisen, welches eine über die beiden Energieversorgungsleitungen das Tragschienenbussystems übertragene Versorgungsgleichspannung auf eine vorbestimmte Gleichspannung zur Versorgung des Sicherheitsrelaismoduls herabsetzt. In ähnlicher Weise kann das wenigstens eine sichere Motorstartermodul ein mit der zweiten Busschnittstelle verbundenes Netzteil aufweisen, welches ein über die beiden Energieversorgungsleitungen des Tragschienenbussystems übertragende Versorgungsgleichspannung auf eine vorbestimmte Gleichspannung zur Versorgung des sicheren Motorstartermoduls herabsetzt.

Die Erfindung wird nachfolgend anhand eines Ausführungsbeispiels in Verbindung mit den beiliegenden Zeichnungen näher erläutert. Es zeigen:
- Figur 1: eine schematische Darstellung einer beispielhaften modularen Schaltvorrichtung,
- Figur 2: die in Figur 1 gezeigte modulare Schaltvorrichtung, deren Module auf dem Tragschienenbussystem nebeneinander aufgerastet sind,
- Figur 3a: eine perspektivische Ansicht auf die Rückseite eines in Fig. 2 gezeigten Busverbinders, und
- Figur 3b: eine perspektivische Ansicht auf die Vorderseite des in Figur 3a gezeigten Busverbinders.

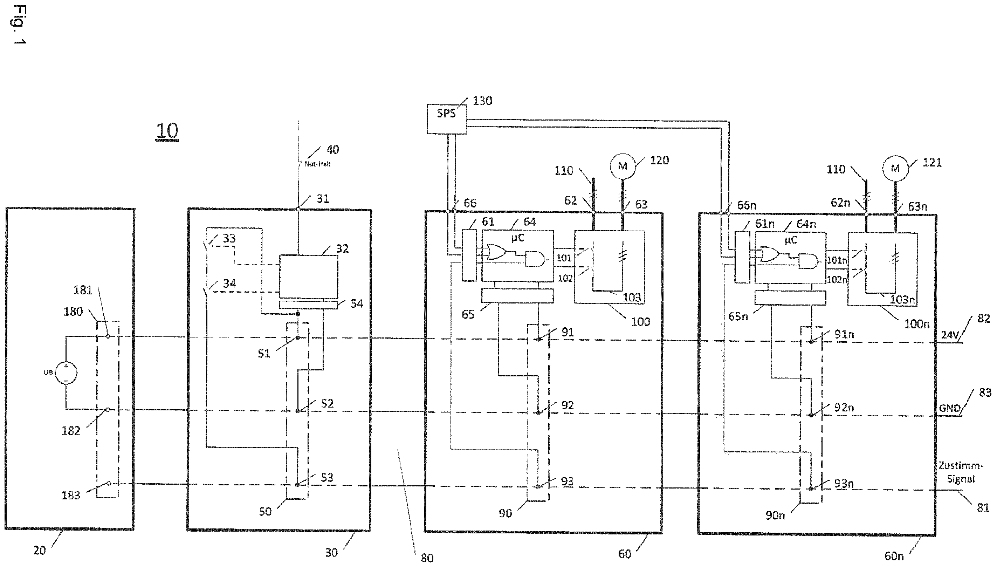

In Figur 1 ist eine beispielhafte modulare Schaltvorrichtung 10 zur Ansteuerung wenigstens eines elektrischen Antriebs 120 schematisch und in Blockschaltbildform dargestellt.

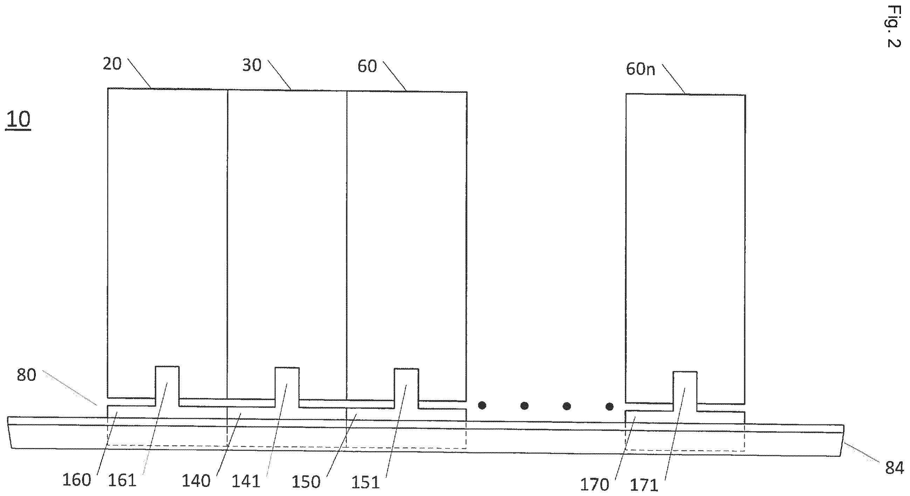

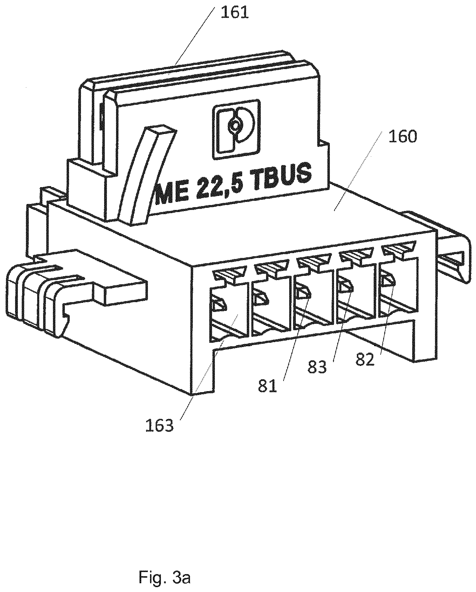

Die modulare Schaltvorrichtung 10 weist ein Tragschienenbussystem 80 auf, das in Figur 2 schematisch dargestellt ist. Das Tragschienenbussystem 80 umfasst eine Tragschiene 84 und wenigstens zwei, nämlich einen ersten Busverbinder 140 und einen zweiten Busverbinder 150, wobei die wenigstens zwei Busverbinder 140 und 150 elektrisch und mechanisch miteinander koppelbar und zum Anordnung in der Tragschiene 84 ausgebildet sind. Dieser Zustand ist in Figur 2 dargestellt. Im montierten Zustand bildet das Tragschienenbussystem 80 eine Steuerleitung 81 und zwei Energieversorgungsleitungen 82 und 83. Das beispielhafte Tragschienenbussystem 80 enthält, wie in Figur 3a zu sehen, fünf Busleitungen, wobei nur die Busleitungen 81, 82 und 83 für die Erfindung relevant und deshalb in Figur 1 gezeichnet sind. Jeder der wenigstens zwei Busverbinder 140 und 150 weist eine Modul-Schnittstelle 141 beziehungsweise 151 auf, die wiederum in Figur 2 ersichtlich sind.

Eine beispielhafte bekannte Ausführungsform des Tragschienenbussystem 80 ist aus der DE 20 2006 006 659 U1 bekannt und beispielsweise dort in der Figur 1 dargestellt. Für eine detaillierte, beispielhafte Beschreibung der wenigstens zwei Busverbinder 140 und 150 wird auf dieses Dokument verwiesen. Der Busverbinder ist in diesem Dokument als Kupplungsteil beziehungsweise Kopplungsteil bezeichnet.

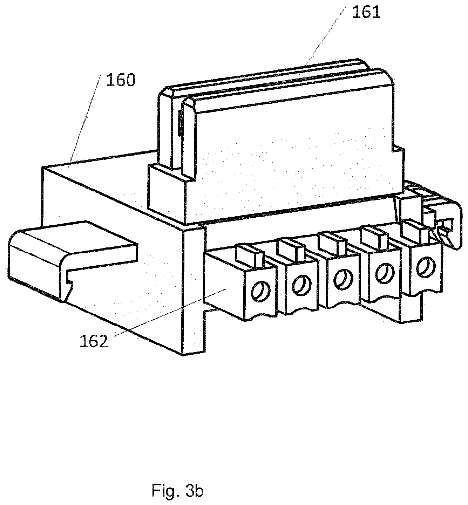

In den Figuren 3a und 3b ist der beispielhafte Aufbau des Busverbinders 160 dargestellt, wobei Figur 3a die Rückansicht und Figur 3b die Vorderansicht des Busverbinders 160 zeigt. Um elektrisch und mechanisch mit anderen Busverbindern, beispielsweise dem Busverbinder 140 gekoppelt werden zu können, weist der Busverbinder 160 eine erste Kopplungsschnittstelle 163 auf, in der die Kontaktstifte der Busleitungen dargestellt sind. Die Steuerleitung 81 und die beiden Energieversorgungsleitungen 82 und 83, beziehungsweise die Kontaktstifte, die mit diesen Leitungen verbunden sind, sind in Figur 3a gezeigt. Darüber hinaus ist noch eine Modul-Schnittstelle 161 dargestellt. Bereits an dieser Stelle sei angemerkt, dass die Busverbinder 140, 150 und 170, die ebenfalls in Figur 2 zu sehen sind, identisch aufgebaut sein können. Bei dem dargestellten Beispiel sind sie identisch ausgebildet.

Zur mechanischen und elektrischen Kopplung weist die Vorderseite des Busverbinders 160 eine weitere Kopplungsschnittstelle 162 auf, die in Form von Buchsen Kontakten ausgebildet ist und zur Aufnahme der Kontaktstifte einer komplementären Kopplungsschnittstelle eines anderen Busverbinders ausgebildet ist.

Angemerkt sei noch, dass die Busverbinder in Figur 1 unterhalb der jeweiligen Module angeordnet und deshalb nicht sichtbar sind.

Die modulare Schaltvorrichtung 10 weist ferner eine Energieversorgungseinrichtung 20 auf, die dazu ausgebildet ist, an den beiden Energieversorgungsleitungen 82 und 83 des Tragschienenbussystems 80 eine Versorgungsgleichspannung UB anzulegen. Angemerkt sei, dass die Energieversorgungseinrichtung 20 ein separates Standardnetzteil sein kann, welches mit den Kontaktstiften des Busverbinders 140, die den Energieversorgungsleitungen 82 und 83 zugeordnet sind, elektrisch verbunden werden kann. Alternativ, und wie in den Figuren gezeigt, kann die Energieversorgungseinrichtung 20 auch als Energieversorgungsmodul ausgebildet sein, welches auf einen weiteren Busverbinder, im dargestellten Beispiel auf den Busverbinder 160 aufgerastet werden kann.

Die modulare Schaltvorrichtung 10 weist ferner ein Sicherheitsrelaismodul 30 auf. Das Sicherheitsrelaismodul 30 enthält eine erste Anschlusseinrichtung 31, an welche eine Not-Halt-Befehlseinrichtung 40 anschaltbar ist. Die Not-Halt-Befehlseinrichtung 40 ist der Einfachheit halber lediglich durch ein Schaltersymbol dargestellt. Weiterhin weist das Sicherheitsrelaismodul 30 eine erste Bus-Schnittstelle 50 auf, die zum elektrischen Verbinden mit der Modulschnittstelle 141 des ersten Busverbinders 140 ausgebildet ist. In an sich bekannter Weise kann die erste Bus-Schnittstelle 50 eine Leiterplatte mit Kontaktflächen aufweisen, die beim Aufrasten auf die Modul-Schnittstelle 141 des Busverbinders 140 mit entsprechenden Kontakten der Modul-Schnittstelle 141 elektrisch verbunden werden, um so elektrisch mit den Busleitungen, insbesondere der Steuerleitung 81 und den Energieversorgungsleitungen 82 und 83 verbunden werden zu können. Mit anderen Worten: Das Sicherheitsrelais 30 ist im montierten Zustand elektrisch mit dem Busverbinder 140 bzw. mit den beiden Energieversorgungsleitungen 82 und 83 und der Steuerleitung 81 des Tragschienenbussystems 80 verbunden.

Wie in Figur 1 weiter dargestellt, weist die Busschnittstelle 50 des Sicherheitsrelaismoduls 30 zumindest drei Kontakte 51 bis 53 auf, die im aufgerasteten Zustand über die Kontakte der Modul-Schnittstelle 141 des Busverbinders 140 eine elektrische Verbindung zur Steuerleitung 81 und zu den beiden Energieversorgungsleitungen 82 und 83 herstellen. Wie bereits angemerkt, weist das beispielhafte Tragschienenbussystem 80 fünf Busleitungen auf, von denen nur die Busleitungen 81 bis 83 hierin eine Rolle spielen. Deshalb sind auch nur drei Kontakte der Busschnittstelle 50 dargestellt.

Das Sicherheitsrelaismodul 30 ist dazu ausgebildet, ein erstes Steuersignal mit einem High-Pegel, nachfolgend auch Zustimmungssignal genannt, aus einer an den beiden Energieversorgungsleitungen 82 und 83 anliegenden Versorgungsgleichspannung UB zu gewinnen und das erste Steuersignal über die erste Bus-Schnittstelle 50 beziehungsweise über den Kontakt 53 der Steuerleitung 81 zuzuführen, wenn die Not-Halt-Befehlseinrichtung 40 nicht betätigt worden ist. Um diese Funktion ausführen zu können, kann das Sicherheitsrelaismodul 30 eine Auswerte- und Steuereinheit 32 aufweisen, die eingangsseitig mit der ersten Anschlusseinrichtung 31 verbunden ist. Weiterhin weist das Sicherheitsrelaismodul 30 vorzugsweise zwei in Reihe geschaltete Schalteinrichtungen 33 und 34 auf, die mit den Kontakten 51 und 53 der Busschnittstelle 50 und somit mit der Energieversorgungsleitung 82, an der das Pluspotential der Energieversorgungseinrichtung 20 anliegt, und mit der Steuerleitung 81 verbunden sind. Ist die Not-Halt-Befehlseinrichtung 40 nicht betätigt worden, d.h., der symbolische Schalter ist geöffnet, sorgt die Auswerte- und Steuereinrichtung 32 dafür, dass die beiden Schalteinrichtungen 33 und 34 geschlossen sind und somit das an der Energieversorgungsleitung 82 anliegende Pluspotential als erstes Steuersignal mit einem High-Pegel über den Kontakt 53 auf die Steuerleitung 81 gelegt wird. Zweckmäßiger Weise kann das Sicherheitsrelaismodul 30 ein Netzteil 54 aufweisen, welches mit den Kontakten 51 und 52 verbunden ist, um die an den Energieversorgungsleitungen 82 und 83 anliegende Betriebsspannung von beispielsweise 24 Volt in eine niedrigere Gleichspannung umzuwandeln, mit der die Auswerte- und Steuereinheit 32 mit Energie versorgt werden kann.

Die modulare Schaltvorrichtung 10 weist ferner wenigstens ein sicheres Motorstartermodul 60 auf. Das sichere Motorstartermodul 60 weist eine zweite Bus-Schnittstelle 90 auf, die insbesondere wiederum eine Leiterplatte mit Anschlusskontakten enthalten kann, um das sichere Motorstartermodul 60 mit den Busleitungen verbinden zu können. Die zweite Bus-Schnittstelle 90 ist zum elektrischen Verbinden mit der Modul-Schnittstelle 151 des Busverbinders 150 ausgebildet, wobei im gekoppelten Zustand die elektrischen Kontakte der Bus-Schnittstelle mit den entsprechenden elektrischen Kontakten der Modul-Schnittstelle 151 verbunden sind. Da, wie bereits oben erwähnt, uns nur die Busleitungen 81 bis 83 interessieren, sind in Figur 1 lediglich Kontakte 91 bis 93 der Bus-Schnittstelle 90 dargestellt, die im aufgerasteten Zustand über die jeweiligen Kontakte der Modul-Schnittstelle 151 mit den Versorgungsleitungen 82 und 83 und der Steuerleitung 81 verbunden sind. Mit anderen Worten: Im verbundenen Zustand ist das sichere Motorstartermodul 60 über den Busverbinder 150 elektrisch mit den beiden Energieversorgungsleitungen 82 und 83 und der Steuerleitung 81 des Tragschienenbussystems 80 verbunden.

Das sichere Motorstartermodul 60 weist ferner eine zweite Anschlusseinrichtung 62 auf, an welche eine Energieversorgungseinrichtung 110 zum Bereitstellen einer Versorgungsspannung für den elektrischen Antrieb 120 anschließbar ist. Bei der Energieversorgungseinrichtung 110 kann es sich beispielsweise um ein Drehstromnetz handeln. In diesem Fall kann der elektrische Antrieb 120 beispielsweise ein Drehstrommotor sein.

Die zweite Anschlusseinrichtung 62 weist somit drei Anschlüsse auf, an die die drei Phasen des beispielhaften Drehstromnetzes 110 angelegt werden können. Ferner ist eine dritte Anschlusseinrichtung 63 vorgesehen, an die der elektrische Antrieb 120 angeschlossen werden kann. Im dargestellten Beispiel weist auch die dritte Anschlusseinrichtung 63 drei Anschlüsse auf. Um den elektrischen Antrieb 120 mit dem Drehstromnetz 110 verbinden zu können, ist vorzugsweise eine Leistungsendstufe 100 vorgesehen, die wenigstens einen Strompfad 103 mit wenigstens zwei in Reihe geschalteten Schalteinrichtungen 101 und 102 aufweist, wobei der wenigstens eine Strompfad 103 zwischen der Anschlusseinrichtung 62 und der Anschlusseinrichtung 63 angeordnet ist. Im erläuterten Beispiel weist die Leistungsendstufe 100 drei Strompfade auf, die jeweils wenigstens zwei in Reihe geschaltete Schalteinrichtungen aufweisen.

Um die Leistungsendstufe 100 ansteuern zu können, weist das sichere Motorstartermodul 60 eine Verarbeitungseinrichtung 64 auf, die beispielsweise als Mikrokontroller ausgebildet sein kann. Die Verarbeitungseinrichtung 64 weist einen Eingang auf, der elektrisch über die Bus-Schnittstelle 90, beziehungsweise über den Kontakt 93 elektrisch mit der Steuerleitung 81 verbindbar ist. Die Verarbeitungseinrichtung 64 ist insbesondere dazu ausgebildet, ein über die Steuerleitung 81 übertragenes erstes Steuersignal mit einem High-Pegel, welches von dem Sicherheitsrelaismodul 30 bereitgestellt worden ist, auszuwerten und Steuersignale zum Ansteuern der wenigstens zwei Schalteinrichtungen 101 und 102 bereitzustellen. Um die Verarbeitungseinrichtung 64 mit Energie versorgen zu können, können die Kontakte 91 und 92 der Bus-Schnittstelle 90 elektrisch mit einem Netzteil 65 verbunden sein, welches die über die Energieversorgungsleitungen 82 und 83 übertragene Energieversorgungsgleichspannung UB in eine entsprechend niedrigere Gleichspannung zur Versorgung der Verarbeitungseinrichtung 64 umwandelt.

Das sichere Motorstartermodul 60 kann eine vierte Anschlusseinrichtung 66 aufweisen, an die eine übergeordnete Steuereinrichtung 130 anschaltbar ist. Bei der übergeordneten Steuereinrichtung 130 kann es sich um eine speicherprogrammierbare Steuereinrichtung (SPS) handeln. Die übergeordnete Steuereinrichtung 130 ist insbesondere dazu ausgebildet, Steuersignale zum Starten oder Abschalten des an der Anschlusseinrichtung 63 angeschalteten elektrischen Antriebs 120 für das sichere Motorstartermodul 60 bereitzustellen. Die übergeordnete Steuereinrichtung 130 kann beispielsweise zweikanalig ausgebildet sein, so dass die Anschlusseinrichtung 66 zwei Anschlüsse aufweist, um die beiden redundanten Steuersignale der übergeordneten Steuereinrichtung 130 empfangen zu können. Die Steuersignale der übergeordneten Steuereinrichtung und die über die Steuerleitung 81 übertragenen Steuersignale können unmittelbar oder galvanisch getrennt, beispielsweise über einen Optokoppler 61, an die jeweiligen Eingänge der Verarbeitungseinrichtung 64 angelegt werden.

Wie bereits erwähnt, kann die Energieversorgungseinrichtung 20 als Energieversorgungsmodul ausgebildet sein. Um einen kompakten und hinsichtlich der Verdrahtung einfachen Aufbau zu ermöglichen, kann das Tragschienenbussystem 80 einen dritten Busverbinder, nämlich den Busverbinder 160 aufweisen, der elektrisch und mechanisch mit den Busverbindern 140 und 150 koppelbar und zum Anordnen in der Tragschiene 84 ausgebildet ist. Eine beispielhafte Ausgestaltung des Busverbinders 160 wurde bereits weiter oben in Verbindung mit den Figuren 3a und 3b erläutert.

Die als Energieversorgungsmodul ausgebildete Energieversorgungseinrichtung 20 weist eine Bus-Schnittstelle 180 auf, die zum elektrischen Verbinden mit der Modul-Schnittstelle 161 des dritten Busverbinders 160 ausgebildet ist. Die Bus-Schnittstelle 180 kann in der zuvor beschriebenen Weise ebenfalls eine Leiterplatte mit Kontakten aufweisen, die mit entsprechenden Kontakten der Modul-Schnittstelle 161 verbunden werden können. Da uns lediglich die Busleitungen 81 bis 83 interessieren, sind in Figur 1 lediglich die Kontakte 181 bis 183 der Bus-Schnittstelle 180 gezeigt. Im verbundenen Zustand ist das Energieversorgungsmodul 20 auf dem Busverbinder 160, der elektrisch und mechanisch mit dem Busverbinder 140 gekoppelt ist, aufgerastet und das Energieversorgungsmodul 20 elektrisch mit den beiden Energieversorgungsleitungen 82 und 83 des Tragschienenbussystems 80 verbunden, so dass die von der Energieversorgungseinrichtung 20 bereitgestellte Versorgungsgleichspannung UB an die beiden Energieversorgungsleitungen 82 und 83 angelegt werden kann.

Ein Vorteil der modularen Schaltvorrichtung 10 kann darin gesehen werden, dass sie in einfacher Weise skaliert werden kann, indem weitere sichere Motorstartermodule 60n angeschlossen werden können. Hierzu muss ein weiteres sicheres Motorstartermodul 60n lediglich über einen weiteren Busverbinder 170 angeschaltet und gegebenenfalls mit der übergeordneten Steuereinrichtung verbunden werden.

Angemerkt sei, dass im gezeigten Ausführungsbeispiel das sichere Motorstartermodul 60 und das weitere sichere Motorstartermodul 60n identisch aufgebaut sein können. Eine detailliertere Beschreibung des sicheren Motorstartermoduls 60n und dessen Ankopplung an das Tragschienenbussystem 80 erübrigt sich daher.

An das weitere sichere Motorstartermodul 60n kann ein weiterer elektrischer Antrieb 121 an die Energieversorgungseinrichtung 110 angeschlossen werden. Steuersignale zum Starten und Anschalten des elektrischen Antriebs 121 werden von der übergeordneten Steuereinrichtung 130 an die Anschlusseinrichtung 66n des weiteren sicheren Motorstartermoduls 60n angelegt. Angemerkt sei, dass das vom Sicherheitsrelaismodul 30 bereitgestellte Steuersignal über die Steuerleitung 83 sowohl dem sicheren Motorstartermodul 60 als auch dem weiteren sicheren Motorstartermodul 60n zugeführt wird. Das Bezugszeichen 60n signalisiert, dass weitere sichere Motorstartermodule an die modulare Schaltvorrichtung 10 angeschlossen werden können, die alle dasselbe Steuersignal von dem Sicherheitsrelais-Modul 30 erhalten.

Weiterhin sei angemerkt, dass nur das von dem Sicherheitsrelaismodul 30 erzeugte Steuersignal über eine Busleitung, nämlich die Steuerleitung 81 des Tragschienenbussystems zu den sicheren Motorstartermodulen 60 und 60n übertragen wird. Die Steuersignale der übergeordneten Steuereinrichtungen 130 werden den sicheren Motorstartermodulen 60 und 60n jeweils über einen gesonderten Übertragungsweg übermittelt, wie dies in Figur 1 dargestellt ist.

In Figur 2 ist die beispielhafte modulare Schaltvorrichtung 10 im montierten Zustand gezeigt. Figur 2 zeigt das Tragschienenbussystem 80, an dem die Energieversorgungseinrichtung 20, das Sicherheitsrelaismodul 30 sowie die beiden sicheren Motorstartermodule 60 und 60n mittels der Busverbinder 160, 140, 150 und 170 angeordnet sind.

Nachfolgend wir die Funktionsweise der schematisch in Figur 1 dargestellten modularen Schaltvorrichtung 10 näher erläutert.

Angenommen sei zunächst, dass der symbolische Schalter, das heißt die Not-Halt-Befehlseinrichtung 40, welche am Sicherheitsrelaismodul 30 angeschlossen ist, nicht betätigt worden ist. Demzufolge wird das an der Energieversorgungsleitung 82 anliegende Potential als Steuersignal mit einem High-Pegel, welches ebenfalls am Kontakt 51 der Bus-Schnittstelle 50 anliegt, über die geschlossenen Schalteinrichtungen 33 und 34 und über den Kontakt 53 der Bus-Schnittstelle 50 auf die Steuerleitung 81 des Tragschienenbussystems 80 gelegt und über den Kontakt 93 der Bus-Schnittstelle 90 des sicheren Motorstartermoduls 60 bzw. den Kontakt 93n der Bus-Schnittstelle 90n unmittelbar oder über den Optokoppler 61 der Verarbeitungseinrichtung 64 beziehungsweise über den Optokoppler 61n der Verarbeitungseinrichtung 64n zugeführt. Angemerkt sei, dass die Verarbeitungseinrichtung 64 des sicheren Motorstartermoduls 60 und die Verarbeitungseinrichtung 64n des sicheren Motorstartermoduls 60n jeweils dazu ausgebildet ist, die Steuersignal der am jeweiligen Motorstartermodul 60 beziehungsweise 60n angeschlossene übergeordnete Steuereinrichtung 130 nur dann auszuwerten und zu verarbeiten, wenn am Eingang der Verarbeitungseinrichtung 64 und der Verarbeitungseinrichtung 64n ein über die Steuerleitung 81 übertragenes erstes Steuersignal mit einem High-Pegel anliegt. In diesem Fall kann die übergeordnete Steuereinrichtung 130 den elektrischen Antrieb 120 und den elektrischen Antrieb 121 unabhängig voneinander zum Beispiel starten oder abschalten.

Gemäß einer beispielhaften Ausgestaltung sind die Verarbeitungseinrichtungen 64 und jeweils dazu ausgebildet, die mehrkanalig übertragenen Steuersignale der übergeordneten Steuereinrichtung 130 und die über die Steuerleitung 81 übertragenen Steuersignale logisch zu verknüpfen. Beispielsweise werden die beiden Steuersignale der übergeordneten Steuereinrichtung 130 mittels eines ODER-Gatters verknüpft und das Ausgangssignal des ODER-Gatters einem nachgeschalteten UND-Gatter zugeführt, an dessen zweiten Eingang das über die Steuerleitung 81 übertragene Steuersignal anliegt.

Angenommen sei nunmehr, dass die Not-Halt-Befehlseinrichtung 40 betätigt worden ist, was einem offenen Schalter entspricht. Die Betätigung der Not-Halt-Befehlseinrichtung 40 wird von der Auswerte- und Steuereinheit 32 erkannt, die daraufhin zwei Steuersignale zum Öffnen der Schalteinrichtungen 33 und 34 erzeugt. Daraufhin wird die elektrische Verbindung zwischen dem Kontakt 51 und dem Kontakt 53 geöffnet, so dass das Sicherheitsrelaismodul 30 ein zweites Steuersignal mit einem Low-Pegel auf die Steuerleitung 81 des Tragschienenbussystems legt. In diesem Fall entspricht das zweite Steuersignal einem 0-Volt-Signal. Die beiden Verarbeitungseinrichtungen 64 und 64n sind jeweils dazu ausgebildet, dass über die Steuerleitung 81 übertragene zweite Steuersignal auszuwerten und unter Ansprechen auf das zweite Steuersignal Steuersignale zu erzeugen, welche die Schalteinrichtungen der Leistungsendstufe 100 bzw. der Leistungsendstufe 100n, das sind zumindest die in Figur 1 gezeigten Schalteinrichtungen 101 und 102 bzw. 101n und 102n, öffnen, so dass der am sicheren Motorstartermodul 60 angeschlossene elektrischen Antrieb 120 und der am sicheren Motorstartermodul 60n angeschlossene elektrische Antrieb 121 sicher abgeschaltet werden. Hierzu sind die Verarbeitungseinrichtungen 64 und 64n jeweils dazu in der Lage, wie bereits oben ausgeführt, die beiden Steuersignale der übergeordneten Steuereinrichtung 130 dem Oder- Gatter zuzuführen und das Ausgangssignal des Oder-Gatters mit dem zweiten Steuersignal dem Und-Gatter zuzuführen. Ist das zweite Steuersignal beispielsweise 0, sorgen die Verarbeitungseinrichtungen 64 und 64n dafür, dass unabhängig vom Steuerbefehl der übergeordneten Steuereinrichtung 130 die elektrischen Antriebe 120 und 121 sicher abgeschaltet werden.

### Bezugszeichenliste

- 10: modulare Schaltvorrichtung
- 20: Energieversorgungseinrichtung, beispielsweise ein Energieversorgungsmodul
- 30: Sicherheitsrelaismodul
- 31: erste Anschlusseinrichtung zum Anschalten einer Not-Halt-Befehlseinrichtung
- 32: Auswerte- und Steuereinheit
- 33,34: Schalteinrichtungen, zum Beispiel elektromechanische Schalter
- 40: Not-Halt-Befehlsreinrichtung
- 50: Bus-Schnittstelle des Sicherheitsrelaismoduls 30
- 51-53: Kontakte der Bus-Schnittstelle 50
- 54: Netzteil, zum Beispiel ein Schaltnetzteil
- 60,60n: sicheres Motorstartermodul
- 61,61n: Optokoppler
- 62, 62n: Anschlusseinrichtung für eine Energieversorgungseinrichtung 110
- 63, 63n: Anschluss für einen elektrischen Antrieb
- 64,64n: Verarbeitungseinrichtung, beispielsweise ein Mikrocontroller
- 65,65n: Netzteil, zum Beispiel ein Schaltnetzteil
- 66,66n: Anschlusseinrichtung zum Anlegen von Steuersignalen einer übergeordneten Steuereinrichtung 130
- 80: Tragschienenbussystem
- 81: Steuerleitung des Tragschienenbussystems
- 82,83: Energieversorgungsleitungen des Tragschienenbussystems
- 84: Tragschiene
- 90,90n: Bus-Schnittstelle des Motorstartermoduls 60 bzw. 60n
- 91-93: Kontakte der Bus-Schnittstelle des Motorstartermoduls 60
- 91n-93n: Kontakte der Bus-Schnittstelle des Motorstartermoduls 60n
- 100,100n: Leistungsendstufe des Motorstarters 60 bzw. 60n
- 101,102: Schalteinrichtungen der Leistungsendstufe 100, zum Beispiel elektromechanische Schalter
- 101n,102n: Schalteinrichtungen der Leistungsendstufe 100n, zum Beispiel elektromechanische Schalter
- 110: Energieversorgungsnetz, beispielsweise ein Drehstromnetz
- 120,121: elektrischer Antrieb, beispielsweise Drehstrommotor
- 130: übergeordnete Steuereinrichtung, beispielsweise eine mehrkanalige SPS
- 140-170: Busverbinder, beispielsweise ein T-förmiger Steckverbinder
- 141-171: Modul-Schnittstelle
- 162: erste Kopplungs-Schnittstelle
- 163: zweite Kopplungs-Schnittstelle
- 180: Bus-Schnittstelle der Energieversorgungseinrichtung 20
- 181-183: Kontakte der Bus-Schnittstelle 180

## Patentansprüche

1. Modulare Schaltvorrichtung (10) zum Ansteuern wenigstens eines elektrischen Antriebs (120), wobei die modulare Schaltvorrichtung (10) folgende Merkmale aufweist:
- ein Tragschienenbussystem (80), welches eine Tragschiene (84) und wenigstens zwei, nämlich einen ersten und einen zweiten Busverbinder (140, 150) aufweist, wobei die wenigstens zwei Busverbinder (140, 150) elektrisch und mechanisch miteinander koppelbar und zum Anordnen in der Tragschiene (84) ausgebildet sind und im montierten Zustand eine Steuerleitung (81) und zwei Energieversorgungsleitungen (82, 83) enthalten, wobei jeder der wenigstens zwei Busverbinder (140, 150) eine Modul-Schnittstelle (141, 151) aufweist,
- eine Energieversorgungseinrichtung (20), die dazu ausgebildet ist, an den beiden Energieversorgungsleitungen (82, 83) des Tragschienenbussystems (80) eine Versorgungsgleichspannung anzulegen,
- ein Sicherheitsrelaismodul (30) mit folgenden Merkmalen:
einer erste Anschlusseinrichtung (31), an welche eine Not-Halt-Befehlseinrichtung (40) anschaltbar ist,
einer ersten Bus-Schnittstelle (50), die zum elektrischen Verbinden mit der Modul-Schnittstelle (141) des ersten Busverbinders (140) ausgebildet ist, wobei im verbundenen Zustand das Sicherheitsrelaismodul (30) elektrisch mit den beiden Energieversorgungsleitungen (82, 83) und der Steuerleitung (81) des Tragschienenbussystems (80) verbunden ist,
wobei das Sicherheitsrelaismodul (30) dazu ausgebildet ist, ein erstes Steuersignal mit einem High-Pegel aus einer an den beiden Energieversorgungsleitungen (82, 83) anliegenden Versorgungsgleichspannung zu gewinnen und das erste Steuersignal über die erste Bus-Schnittstelle (50) der Steuerleitung (81) zuzuführen, wenn die Not-Halt-Befehlseinrichtung (40) nicht betätigt worden ist,
- wenigstens ein sicheres Motorstartermodul (60) mit folgenden Merkmalen:
einer zweiten Bus-Schnittstelle (90), die zum elektrischen Verbinden mit der Modul-Schnittstelle (151) des zweiten Busverbinders (150) ausgebildet ist,
wobei im verbundenen Zustand das sichere Motorstartermodul (60) elektrisch mit den beiden Energieversorgungsleitungen (82, 83) und der Steuerleitung (81) des Tragschienenbussystems (80) verbunden ist,
einer zweiten Anschlusseinrichtung (62), an welche eine Energieversorgungseinrichtung (110) zum Bereitstellen einer Versorgungsspannung für einen elektrischen Antrieb (120) anschließbar ist, einer dritten Anschlusseinrichtung (63) zum Anschalten eines elektrischen Antriebs (120),
wenigstens einem Strompfad (103) mit wenigstens zwei in Reihe geschalteten Schalteinrichtungen (101, 102), die zwischen der zweiten und dritten Anschlusseinrichtung (62, 63) angeordnet sind, und
einer Verarbeitungseinrichtung (64) mit einem Eingang, der elektrisch über die zweite Bus-Schnittstelle (90) mit der Steuerleitung (81) verbindbar ist, wobei die Verarbeitungseinrichtung (64) dazu ausgebildet ist, ein über die Steuerleitung (81) übertragenes erstes Steuersignal mit einem High-Pegel auszuwerten und Steuersignale zum Ansteuern der wenigstens zwei Schalteinrichtungen (101, 102) bereitzustellen.

2. Modulare Schaltvorrichtung nach Anspruch 1,
**dadurch gekennzeichnet, dass**
das Sicherheitsrelaismodul (30) dazu ausgebildet ist, ein zweites Steuersignal mit einem Low-Pegel bereitzustellen und das zweite Steuersignal über die erste Bus-Schnittstelle (50) der Steuerleitung (81) des Tragschienenbussystems (80) zuzuführen, wenn die Not-Halt-Befehlseinrichtung (40) betätigt worden ist, wobei
die Verarbeitungseinrichtung (64) des wenigstens einen sicheren Motorstartermoduls (60) dazu ausgebildet ist, ein über die Steuerleitung (81) übertragenes zweites Steuersignal mit einem Low-Pegel auszuwerten und unter Ansprechen auf das zweite Steuersignal mit Low-Pegel Steuersignale zum Öffnen der wenigstens zwei Schalteinrichtungen (101, 102) zu erzeugen, um einen am wenigstens einen sicheren Motorstartermodul (60) angeschlossenen elektrischen Antrieb (120) sicher abzuschalten.

3. Modulare Schaltvorrichtung nach Anspruch 1 oder 2,
**dadurch gekennzeichnet, dass**
das wenigstens eine sichere Motorstartermodul (60) eine vierte Anschlusseinrichtung (66) aufweist, an die eine übergeordnete Steuereinrichtung (130) anschaltbar ist, wobei die übergeordnete Steuereinrichtung (130) Steuersignale zum Starten oder Abschalten eines an das wenigstens eine Motorstartermodul (60) angeschalteten elektrischen Antriebs (120) für das sichere Motorstartermodul bereitstellen kann.

4. Modulare Schaltvorrichtung nach Anspruch 3,
**dadurch gekennzeichnet, dass**
die Verarbeitungseinrichtung (64) des wenigstens einen sicheren Motorstartermoduls (60) dazu ausgebildet ist, die Steuersignale der am sicheren Motorstartermodul (60) angeschlossenen übergeordneten Steuereinrichtung (130) nur dann auszuwerten und zu verarbeiten, wenn am Eingang der Verarbeitungseinrichtung (64) ein über die Steuerleitung (81) übertragenes erstes Steuersignal mit einem High-Pegel anliegt.

5. Modulare Schaltvorrichtung nach einem der Ansprüche 1 bis 4,
**dadurch gekennzeichnet, dass**
das Tragschienenbussystem (80) einen dritte Busverbinder (160) aufweist, der elektrisch und mechanisch mit den wenigstens zwei Busverbindern (140, 150) koppelbar und zum Anordnen in der Tragschiene (84) ausgebildet ist und eine Modul-Schnittstelle (161) aufweist, wobei
die Energieversorgungseinrichtung (20) als Energieversorgungsmodul ausgebildet ist und eine dritte Bus-Schnittstelle (180) aufweist, die zum elektrischen Verbinden mit der Modul-Schnittstelle (161) des dritten Busverbinders (160) ausgebildet ist, wobei im verbundenen Zustand das Energieversorgungsmodul elektrisch mit den beiden Energieversorgungsleitungen (82, 83) des Tragschienenbussystems (80) verbunden ist und eine Versorgungsgleichspannung an die beiden Energieversorgungsleitungen (82, 83) anlegen kann.

6. Modulare Schaltvorrichtung nach Anspruch 5,
**gekennzeichnet durch**
einen vierten Busverbinder (170) mit einer Modul-Schnittstelle (171) und ein weiteres sicheres Motorstartermodul (60n) mit folgenden Merkmalen:
einer vierten Bus-Schnittstelle (90n), die zum elektrischen Verbinden mit der Modul-Schnittstelle (191) des vierten Busverbinders (190) ausgebildet ist, wobei im verbundenen Zustand das weitere sichere Motorstartermodul (60n) elektrisch mit den beiden Energieversorgungsleitungen (82, 83) und der Steuerleitung (81) des Tragschienenbussystems (80) verbunden ist,
einer fünften Anschlusseinrichtung (62n), an welche eine Energieversorgungseinrichtung (110) zum Bereitstellen einer Versorgungsspannung für einen weiteren elektrischen Antrieb (121) anschließbar ist,
einer sechsten Anschlusseinrichtung (63n) zum Anschalten eines weiteren elektrischen Antriebs (121),
wenigstens einem Strompfad (103n) mit wenigstens zwei in Reihe geschalteten Schalteinrichtungen (101n, 102n), die zwischen der fünften und sechsten Anschlusseinrichtung (62n, 63n) angeordnet sind, und
einer Verarbeitungseinrichtung (64n) mit einem Eingang, der elektrisch über die vierte Bus-Schnittstelle (90n) mit der Steuerleitung (81) verbindbar ist, wobei die Verarbeitungseinheit (64n) dazu ausgebildet ist, ein über die Steuerleitung (81) übertragenes erstes Steuersignal mit einem High-Pegel auszuwerten und Steuersignale zum Ansteuern der wenigstens zwei Schalteinrichtungen (101n, 102n) bereitzustellen.

7. Modulare Schaltvorrichtung nach einem der vorstehenden Ansprüche,
**dadurch gekennzeichnet, dass**
die Busverbinder (140-170) jeweils als T-förmige Steckverbinder ausgebildet sind.

8. Modulare Schaltvorrichtung nach einem der vorstehenden Ansprüche,
**dadurch gekennzeichnet, dass**
das Sicherheitsrelaismodul (30) ein mit der ersten Bus-Schnittstelle (50) verbundenes Netzteil (54) aufweist, welches eine über die beiden Energieversorgungsleitungen (82, 83) des Tragschienenbussystems (80) übertragene Versorgungsgleichspannung auf eine vorbestimmte Gleichspannung zur Versorgung des Sicherheitsrelaismoduls herabsetzt, und dass das wenigstens eine sichere Motorstartermodul (60) ein mit der zweiten Bus-Schnittstelle (90) verbundenes Netzteil (65) aufweist, welches eine über die beiden Energieversorgungsleitungen (82, 83) des Tragschienenbussystems (80) übertragene Versorgungsgleichspannung auf eine vorbestimmte Gleichspannung zur Versorgung des sicheren Motorstartermoduls herabsetzt.

## Claims

1. Modular switching device (10) for controlling at least one electric drive (120), the modular switching device (10) having the following features:
- a mounting rail bus system (80), which has a mounting rail (84) and at least two, namely a first and a second bus connector (140, 150), the at least two bus connectors (140, 150) being electrically and mechanically couplable to one another and being designed for arrangement in the mounting rail (84) and, in the mounted state, containing a control line (81) and two power supply lines (82, 83), each of the at least two bus connectors (140, 150) having a module interface (141, 151)
- a power supply device (20) which is designed to apply a DC supply voltage to the two power supply lines (82, 83) of the mounting rail bus system (80),
- a safety relay module (30) with the following features:
a first connection device (31) to which an emergency stop command device (40) can be connected,
a first bus interface (50) which is designed for electrical connection to the module interface (141) of the first bus connector (140), wherein in the connected state the safety relay module (30) is electrically connected to the two power supply lines (82, 83) and the control line (81) of the mounting rail bus system (80),
wherein the safety relay module (30) is designed to obtain a first control signal with a high level from a DC supply voltage applied to the two power supply lines (82, 83) and to supply the first control signal to the control line (81) via the first bus interface (50) when the emergency stop command device (40) has not been actuated
- at least one safe motor starter module (60) with the following features:
a second bus interface (90), which is designed for electrical connection to the module interface (151) of the second bus connector (150), the safe motor starter module (60) being electrically connected to the two power supply lines (82, 83) and the control line (81) of the mounting rail bus system (80) in the connected state,
a second connection device (62), to which a power supply device (110) for providing a supply voltage for an electric drive (120) can be connected,
a third connection device (63) for connecting an electric drive (120),
at least one current path (103) with at least two series-connected switching devices (101, 102), which are arranged between the second and third connection devices (62, 63), and
a processing device (64) with an input which can be electrically connected to the control line (81) via the second bus interface (90), wherein
the processing device (64) is designed to evaluate a first control signal having a high level, the first control signal being transmitted via the control line (81), and to provide control signals for controlling the at least two switching devices (101, 102).

2. Modular switching device according to claim 1,
**characterised in that**
the safety relay module (30) is designed to provide a second control signal with a low level and to supply the second control signal via the first bus interface (50) to the control line (81) of the mounting rail bus system (80) when the emergency stop command device (40) has been actuated, wherein
the processing device (64) of the at least one safe motor starter module (60) is designed to evaluate a second control signal with a low level, the second control signal being transmitted via the control line (81), and, in response to the second control signal with a low level, to generate control signals for opening the at least two switching devices (101, 102) in order to safely switch off an electric drive (120) connected to the at least one safe motor starter module (60).

3. Modular switching device according to claim 1 or 2,
**characterised in that**
the at least one safe motor starter module (60) has a fourth connection device (66) to which a higher-level control device (130) can be connected, wherein the higher-level control device (130) can provide control signals for starting or switching off a electric drive (120) connected to the at least one motor starter module (60) for the safe motor starter module.

4. Modular switching device according to claim 3,
**characterised in that**
the processing device (64) of the at least one safe motor starter module (60) is designed to evaluate and process the control signals of the higher-level control device (130) connected to the safe motor starter module (60) only if a first control signal transmitted via the control line (81) with a high level applies to the input of the processing device (64).

5. Modular switching device according to any one of claims 1 to 4,
**characterised in that**
the mounting rail bus system (80) has a third bus connector (160) which can be coupled electrically and mechanically to the at least two bus connectors (140, 150) and is designed for arrangement in the mounting rail (84) and has a module interface (161), wherein
the power supply device (20) is designed as a power supply module and has a third bus interface (180) which is designed for electrical connection to the module interface (161) of the third bus connector (160), wherein in the connected state the power supply module is electrically connected to the two power supply lines (82, 83) of the mounting rail bus system (80) and can apply a DC supply voltage to the two power supply lines (82, 83).

6. Modular switching device according to claim 5,
**characterised by**
a fourth bus connector (170) with a module interface (171) and
a further safe motor starter module (60n) having the following features:
a fourth bus interface (90n) which is designed for electrical connection to the module interface (191) of the fourth bus connector (190), wherein in the connected state the further safe motor starter module (60n) is electrically connected to the two power supply lines (82, 83) and the control line (81) of the mounting rail bus system (80),
a fifth connection device (62n), to which a power supply device (110) for providing a supply voltage for a further electric drive (121) can be connected,
a sixth connection device (63n) for connecting a further electric drive (121),
at least one current path (103n) with at least two series-connected switching devices (101n, 102n), which are arranged between the fifth and sixth connection devices (62n, 63n), and
a processing unit (64n) with an input which can be electrically connected to the control line (81) via the fourth bus interface (90n), wherein
the processing unit (64n) is designed to evaluate a first control signal with a high level, the first control signal being transmitted via the control line (81), and to provide control signals for controlling the at least two switching devices (101n, 102n).

7. Modular switching device according to any one of the preceding claims,
**characterised in that**
the bus connectors (140-170) are each designed as T-shaped plug connectors.

8. Modular switching device according to any one of the preceding claims,
**characterised in that**
the safety relay module (30) has a power supply unit (54) which is connected to the first bus interface (50) and which reduces a DC supply voltage transmitted via the two power supply lines (82, 83) of the mounting rail bus system (80) to a predetermined DC voltage for supplying the safety relay module, and **in that** the at least one safe motor starter module (60) has a power supply unit (65) which is connected to the second bus interface (90) and which reduces a DC supply voltage transmitted via the two power supply lines (82, 83) of the mounting rail bus system (80) to a predetermined DC voltage for supplying the safe motor starter module.

## Revendications

1. Dispositif de commutation (10) modulaire permettant de commander au moins un entraînement (120) électrique, le dispositif de commutation (10) modulaire comportant les caractéristiques suivantes :
- un système de bus (80) à rail porteur, lequel comporte un rail porteur (84) et au moins deux, à savoir un premier et un deuxième connecteur de bus (140, 150), dans lequel les au moins deux connecteurs de bus (140, 150) peuvent être connectés électriquement et accouplés mécaniquement l'un à l'autre et sont conçus pour être disposés dans le rail porteur (84) et, lorsqu'ils sont montés, comprennent une ligne de commande (81) et deux lignes d'alimentation en énergie (82, 83), dans lequel chacun des au moins deux connecteurs de bus (140, 150) comporte une interface de module (141, 151),
- un dispositif d'alimentation en énergie (20), qui est conçu pour appliquer une tension d'alimentation continue aux deux lignes d'alimentation en énergie (82, 83) du système de bus (80) à rail porteur,
- un module relais de sécurité (30) comportant les caractéristiques suivantes :
un premier dispositif de connexion (31), auquel peut être connecté un dispositif de commande d'arrêt d'urgence (40), une première interface de bus (50), qui est conçue pour se connecter électriquement à l'interface de module (141) du premier connecteur de bus (140), dans lequel, lorsqu'il est connecté, le module de relais de sécurité (30) est connecté électriquement aux deux lignes d'alimentation en énergie (82, 83) et à la ligne de commande (81) du système de bus (80) à rail porteur, dans lequel le module de relais de sécurité (30) est conçu pour obtenir un premier signal de commande présentant un niveau élevé à partir d'une tension d'alimentation continue appliquée aux deux lignes d'alimentation (82, 83) et pour fournir le premier signal de commande par l'intermédiaire de la première interface de bus (50) de la ligne de commande (81) lorsque le dispositif de commande d'arrêt d'urgence (40) n'a pas été actionné,
- au moins un module démarreur de moteur (60) sécurisé comportant les caractéristiques suivantes : une deuxième interface de bus (90), qui est conçue pour se connecter électriquement à l'interface de module (151) du deuxième connecteur de bus (150), dans lequel, lorsqu'il est connecté, le module démarreur de moteur (60) sécurisé est connecté électriquement aux deux lignes d'alimentation en énergie (82, 83) et à la ligne de commande (81) du système de bus (80) à rail porteur, un deuxième dispositif de connexion (62) auquel un dispositif d'alimentation en énergie (110) peut être connecté pour fournir une tension d'alimentation à l'entraînement (120) électrique, un troisième dispositif de connexion (63) pour démarrer l'entraînement (120) électrique, au moins un chemin de courant (103) comportant au moins deux dispositifs de commutation (101, 102) connectés en série, qui sont disposés entre les deuxième et troisième dispositifs de connexion (62, 63), et un dispositif de traitement (64) comportant une entrée, qui peut être connectée électriquement par l'intermédiaire de la deuxième interface de bus (90) à la ligne de commande (81), dans lequel le dispositif de traitement (64) est conçu pour évaluer un premier signal de commande présentant un niveau élevé transmis par l'intermédiaire de la ligne de commande (81) et pour fournir les signaux de commande pour commander les au moins deux dispositifs de commutation (101, 102).

2. Dispositif de commutation modulaire selon la revendication 1, **caractérisé en ce que** le module relais de sécurité (30) est conçu pour fournir un deuxième signal de commande présentant un niveau bas et pour fournir le deuxième signal de commande par l'intermédiaire de la première interface de bus (50) de la ligne de commande (81) du système de bus (80) à rail porteur, lorsque le dispositif de commande d'arrêt d'urgence (40) a été actionné, dans lequel le dispositif de traitement (64) de l'au moins un module démarreur de moteur (60) sécurisé est conçu pour évaluer le deuxième signal de commande présentant le niveau bas transmis par l'intermédiaire de la ligne de commande (81) et pour générer, en réponse au deuxième signal de commande présentant le niveau bas, des signaux de commande pour ouvrir les au moins deux dispositifs de commutation (101, 102) pour éteindre de manière sécurisée au moins un entraînement (120) électrique connecté au module démarreur de moteur (60) sécurisé.

3. Dispositif de commutation modulaire selon la revendication 1 ou 2, **caractérisé en ce que** l'au moins un module démarreur de moteur (60) sécurisé comporte un quatrième dispositif de connexion (66) auquel peut être connecté un dispositif de commande (130) supérieur, dans lequel le dispositif de commande (130) supérieur peut fournir des signaux de commande pour démarrer ou éteindre un entraînement (120) électrique connecté à l'au moins un module démarreur de moteur (60) peut assurer le module démarreur de moteur sécurisé.

4. Dispositif de commutation modulaire selon la revendication 3, **caractérisé en ce que** le dispositif de traitement (64) de l'au moins un module démarreur de moteur (60) sécurisé est conçu pour évaluer et traiter les signaux de commande du dispositif de commande (130) supérieur connecté au module démarreur de moteur (60) sécurisé uniquement lorsque, au niveau de l'entrée du dispositif de traitement (64), est appliqué le premier signal de commande présentant le niveau élevé transmis par l'intermédiaire de la ligne de commande (81).

5. Dispositif de commutation modulaire selon l'une quelconque des revendications 1 à 4, **caractérisé en ce que** le système de bus (80) à rail porteur comporte un troisième connecteur de bus (160), qui peut être connecté électriquement et accouplé mécaniquement à les au moins deux connecteurs de bus (140, 150) et est conçu pour être disposé dans le rail porteur (84) et comporte une interface de module (161), dans lequel le dispositif d'alimentation en énergie (20) est conçu sous la forme d'un module d'alimentation en énergie et une troisième interface de bus (180), qui est conçue pour se connecter électriquement à l'interface de module (161) du troisième connecteur de bus (160), dans lequel, lorsqu'il est connecté, le module d'alimentation en énergie est connecté électriquement aux deux lignes d'alimentation en énergie (82, 83) du système de bus (80) à rail porteur et peut appliquer la tension d'alimentation continue aux deux lignes d'alimentation en énergie (82, 83).

6. Dispositif de commutation modulaire selon la revendication 5, **caractérisé par** un quatrième connecteur de bus (170) comportant une interface de module (171) et un autre module démarreur de moteur (60n) sécurisé comportant les caractéristiques suivantes : une quatrième interface de bus (90n), qui est conçue pour se connecter électriquement à l'interface de module (191) du quatrième connecteur de bus (190), dans lequel, lorsqu'il est connecté, l'autre module démarreur de moteur (60n) sécurisé est connecté électriquement aux deux lignes d'alimentation en énergie (82, 83) et à la ligne de commande (81) du système de bus (80) à rail porteur, un cinquième dispositif de connexion (62n), auquel un dispositif d'alimentation en énergie (110) peut être connecté pour fournir une tension d'alimentation à un autre entraînement (121) électrique, un sixième dispositif de connexion (63n) pour démarrer un autre entraînement (121) électrique, au moins un chemin de courant (103n) comportant au moins deux dispositifs de commutation (101n, 102n) connectés en série, lesquels sont disposés entre les cinquième et sixième dispositifs de connexion (62n, 63n), et un dispositif de traitement (64n) comportant une entrée, qui peut être connectée électriquement à la ligne de commande (81) par l'intermédiaire de la quatrième interface de bus (90n), dans lequel l'unité de traitement (64n) est conçue pour évaluer un premier signal de commande présentant un niveau élevé transmis par l'intermédiaire de la ligne de commande (81) et pour fournir les signaux de commande pour commander les au moins deux dispositifs de commutation (101n, 102n).

7. Dispositif de commutation modulaire selon l'une quelconque des revendications précédentes, **caractérisé en ce que** les connecteurs de bus (140 à 170) sont respectivement conçus sous la forme de connecteur enfichable en forme de T.

8. Dispositif de commutation modulaire selon l'une quelconque des revendications précédentes, **caractérisé en ce que** le module relais de sécurité (30) comporte une alimentation secteur (54) connectée à la première interface de bus (50), laquelle réduit tension d'alimentation continue, transmise par l'intermédiaire des deux lignes d'alimentation en énergie (82, 83) du système de bus (80) à rail porteur, à une tension continue prédéterminée pour alimenter le module de relais de sécurité, et **en ce que** l'au moins un module démarreur de moteur (60) sécurisé comporte une alimentation secteur (65) connectée à la deuxième interface de bus (90), laquelle réduit une tension d'alimentation continue, transmise par l'intermédiaire des deux lignes d'alimentation en énergie (82, 83) du système de bus (80) à rail porteur, à une tension continue prédéterminée pour alimenter le module démarreur de moteur sécurisé.
